# EUROPEAN PATENT APPLICATION

(11) **EP 4 745 897 A1**
(43) Date of publication of application: **20.05.2026**
(21) Application number: 25212401.1
(22) Date of filing: 30.10.2025
(51) Int. Cl.: G06T 11/10

(54) **IMAGE GENERATION METHOD, MEDIUM, COMPUTER DEVICE, AND PROGRAM PRODUCT**

(30) Priority: 18.11.2024 CN 202411649868
(71) Applicant: Hangzhou Alibaba International Internet Industry Co., Ltd., Hangzhou City, Zhejiang Province (CN)
(72) Inventor: YE, Chao, Hangzhou City (CN); YANG, Xue, Hangzhou City (CN); WANG, Yiyu, Hangzhou City (CN); WEI, Shuangqin, Hangzhou City (CN); LING, Yue, Hangzhou City (CN)
(74) Representative: Wu, Ting

(57) **Abstract**

An image generation method, apparatus, computer program product, and computer-readable storage medium are provided. The method includes: acquiring an original image and visual description information corresponding to the original image; and performing style transfer on the original image through a pre-trained style transfer model to obtain a target image in a preset style. The style transfer model includes a plurality of feature extraction modules, comprising a color feature extraction module for extracting a color feature and a non-color feature extraction module for extracting visual features other than the color feature. The color feature extraction module extracts the color feature of a target object based on the original image and the visual description information. The non-color feature extraction module extracts other visual features of the target object based on the visual description information. The style transfer model performs style transfer on the original image based on the extracted color feature and other visual features to obtain the target image.

## Description

### TECHNICAL FIELD

The present application relates to the field of image processing technologies, and in particular, to an image generation method, medium, computer device, and program product.

### BACKGROUND

Style transfer aims to convert an input image into an output image of another preset style. Style transfer is essentially achieved by changing the pixel values of the input image. Therefore, the color of a target object in an output image obtained through style transfer may be inconsistent with the color of the target object in the input image. In the related art, it is difficult to improve the consistency between the color of the target object in the output image and the color of the target object in the input image on the basis of following a preset style.

### SUMMARY

In a first aspect, an embodiment of the present application provides an image generation method, the method comprising: acquiring an original image and visual description information corresponding to the original image; performing style transfer on the original image through a pre-trained style transfer model to obtain a target image of a preset style; wherein the style transfer model includes a plurality of feature extraction modules, the plurality of feature extraction modules including a color feature extraction module configured to extract color features and a non-color feature extraction module configured to extract other visual features other than color features; the color feature extraction module is configured to extract color features of a target object based on the original image and the visual description information, and the non-color feature extraction module is configured to extract other visual features of the target object based on the visual description information; the style transfer model is configured to perform style transfer on the original image based on the color features extracted by the color feature extraction module and the other visual features extracted by the non-color feature extraction module to obtain the target image.

In a second aspect, an embodiment of the present application provides a computer-readable storage medium on which a computer program is stored, wherein the program, when executed by a processor, implements the method according to any embodiment of the present application.

In a third aspect, an embodiment of the present application provides a computer device, comprising a memory, a processor, and a computer program stored on the memory and executable on the processor, wherein the processor, when executing the program, implements the method according to any embodiment of the present application.

In a fourth aspect, an embodiment of the present application provides a computer program product, comprising a computer program, wherein the computer program, when executed by a processor, implements the method according to any embodiment of the present application.

In embodiments of the present application, the applicant has found that different feature extraction modules in a style transfer model have different functions. Some feature extraction modules are used to extract color features, while another portion of feature extraction modules is used to extract visual features other than color features. If the original image is injected into each of the plurality of feature extraction modules during style transfer, each feature extraction module will learn the visual features of the original image from multiple dimensions, ultimately making it difficult for the target image output by the style transfer model to follow the preset style well. Therefore, embodiments of the present application only perform targeted injection of the original image into the color feature extraction module configured to extract color features among the plurality of feature extraction modules, and do not inject it into the non-color feature extraction module configured to extract non-color features. In this way, on the one hand, the color features of the original image are learned during feature extraction, thereby improving the color consistency between the target object in the target image and the target object in the original image; on the other hand, since the original image is referenced only when extracting color features and not when extracting other visual features, it prevents the other visual features of the original image from affecting the feature extraction process, enabling the target image to follow the preset style well.

It should be understood that the foregoing general description and the following detailed description are merely exemplary and explanatory, and are not intended to limit the present application.

### BRIEF DESCRIPTION OF THE DRAWINGS

The accompanying drawings, which are incorporated in and constitute a part of this specification, illustrate embodiments consistent with the present application and, together with the description, serve to explain the technical solutions of the present application.
FIG. 1 is a schematic diagram of an application scenario according to an embodiment of the present application.
FIG. 2 is a flowchart of an image generation method according to an embodiment of the present application.
FIG. 3 is a schematic diagram of a training process of a first multimodal large language model according to an embodiment of the present application.
FIG. 4 is a schematic diagram of a process for acquiring a sample image-text pair according to an embodiment of the present application.
FIG. 5 is a schematic structural diagram of a style transfer model according to an embodiment of the present application.
FIG. 6 is a block diagram of an image generation apparatus according to an embodiment of the present application.
FIG. 7 is a schematic diagram of a computer device according to an embodiment of the present application.

### DETAILED DESCRIPTION OF THE EMBODIMENTS

Exemplary embodiments will be described in detail herein, with examples thereof illustrated in the accompanying drawings. When the following description refers to the accompanying drawings, the same numbers in different drawings represent the same or similar elements unless otherwise indicated. The implementations described in the following exemplary embodiments do not represent all implementations consistent with the present application. Instead, they are merely examples of apparatuses and methods consistent with some aspects of the present application as detailed in the appended claims.

The terminology used in the present application is for the purpose of describing particular embodiments only and is not intended to be limiting of the present application. The singular forms "a," "the," and "said" as used in the present application and the appended claims are also intended to include the plural forms, unless the context clearly indicates otherwise. It should also be understood that the term "and/or" as used herein refers to and includes any and all possible combinations of one or more of the associated listed items. In addition, the term "at least one" herein represents any one of a plurality of items or any combination of at least two of a plurality of items.

It should be understood that although the terms first, second, third, etc., may be used in the present application to describe various information, such information should not be limited to these terms. These terms are only used to distinguish one type of information from another. For example, without departing from the scope of the present application, first information could also be called second information, and similarly, second information could also be called first information. Depending on the context, the word "if" as used herein may be interpreted as "when" or "upon" or "in response to determining."

To enable a person of ordinary skill in the art to better understand the technical solutions in the embodiments of the present application, and to make the above-mentioned objects, features, and advantages of the embodiments of the present application more apparent and understandable, the technical solutions in the embodiments of the present application will be further described in detail below with reference to the accompanying drawings.

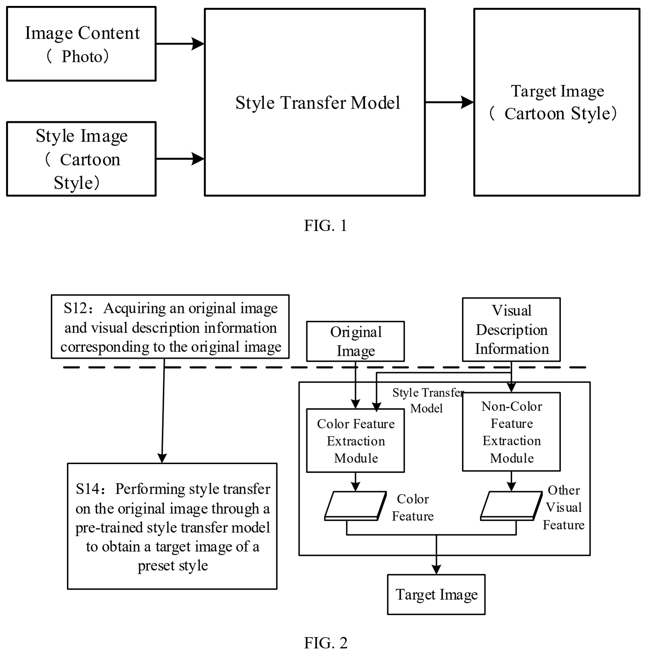

Style transfer aims to convert an image into an image of another preset style. For example, an image in a cartoon style can be converted into an image in an embroidery style; or, a real-shot image can be converted into an image in a cartoon style; or, other types of style conversion can be performed. Style transfer can be implemented through a pre-trained style transfer model. As shown in FIG. 1, a content image and a style image can be input into a style transfer model. In some embodiments, the content image is an original image whose content information is desired to be preserved, and the style image is used to define the artistic style to be applied to the content image. The style transfer model can convert the content image to the style defined by the style image. As shown in FIG. 1, the content image is a real-shot photograph, and the style image is an image in a cartoon style. By inputting the content image and the style image into the style transfer model, a target image output by the style transfer model can be obtained. The style of the target image is the same as the style defined by the style image, both being a cartoon style, and the image content of the target image is the same as the image content in the content image. For example, if the content image is an image of a puppy, the target image is an image of a puppy in a cartoon style.

Style transfer is essentially achieved by changing the pixel values of the input image. Therefore, the color of a target object in an output image obtained through style transfer may be inconsistent with the color of the target object in the input image. In the related art, it is difficult to improve the consistency between the color of the target object in the output image and the color of the target object in the input image on the basis of following a preset style.

Based on this, the present application provides an image generation method. Referring to FIG. 2, the method includes:
Step S12: acquiring an original image and visual description information corresponding to the original image;
Step S14: performing style transfer on the original image through a pre-trained style transfer model to obtain a target image of a preset style.

The style transfer model includes a plurality of feature extraction modules, the plurality of feature extraction modules including a color feature extraction module configured to extract color features and a non-color feature extraction module configured to extract non-color features; the color feature extraction module is configured to extract color features of a target object based on the original image and the visual description information, and the non-color feature extraction module is configured to extract other visual features of the target object based on the visual description information; the style transfer model performs style transfer on the original image based on the color features extracted by the color feature extraction module and the other visual features extracted by the non-color feature extraction module to obtain the target image.

The present application inputs the visual description information corresponding to the original image simultaneously into the color feature extraction module configured to extract color features and the non-color feature extraction module configured to extract non-color features, so that both the color feature extraction module and the non-color feature extraction module can learn corresponding visual features from the visual description information; at the same time, the original image is subjected to targeted injection into the color feature extraction module but not into the non-color feature extraction module, so that the color feature extraction module can reference the original image when extracting color features, while the non-color feature extraction module does not reference the original image when extracting other visual features. In this way, the color features of the original image can be learned well, thereby improving the color consistency between the target object in the target image and the target object in the original image; at the same time, it also prevents the other visual features of the original image from affecting the feature extraction process, enabling the target image to follow the preset style well.

The specific implementation of the embodiments of the present application will be illustrated below with examples.

In step S12, the original image can be an image of any style, which can be obtained by being captured by an image capturing device, drawn by drawing software, synthesized by AI, or acquired through other means. The number of original images can be greater than or equal to 1. When the number of original images is greater than 1, each original image can be subjected to style transfer independently. Alternatively, image fusion can be first performed on a plurality of original images to obtain a fused image, and then style transfer is performed on the fused image. Alternatively, style transfer can be performed independently on each original image to obtain a target image corresponding to each original image, and then image fusion is performed on the target images corresponding to each original image. The aforementioned image fusion can be a fusion of image content, such as fusing the image content of a plurality of images into one image; it can also be a fusion of pixel values of the images, such as performing a weighted average of the pixel values of corresponding pixel points in a plurality of images; it can also be image fusion in other dimensions, which will not be enumerated here.

The visual description information corresponding to the original image is used to describe the visual features of the original image. The visual features described by the visual description information may include, but are not limited to, at least one of the following: color features, texture features, shape features, transparency features, spatial features, etc. Optionally, the visual description information may include information for describing the overall visual features of the original image, or it may include information for describing the visual features of a target object in the original image. The target object may be the main subject of the image in the original image, such as the object with the largest number of pixel points in the original image, an object of a specified category, an object at a specified compositional position in the original image, the object with the largest quantity in the original image, or an object determined based on other conditions. When the visual description information includes information for describing the visual features of the target object in the original image, the described visual features of the target object may include the overall visual features of the target object, or may include the visual features of local regions of the target object. For example, when the target object is an animal, the overall visual features of the target object may include the overall color, action, and expression of the target object; the visual features of local regions of the target object may include the color and shape of the target object's eyes, the length of the target object's tail, the texture of the target object's fur, etc.

The visual description information may be text information. The visual description information can be extracted from the original image through a pre-trained first multimodal large language model (MLLM). A multimodal large language model can understand data of multiple modalities (such as text, images, etc.). In this embodiment, the input of the multimodal large language model can be an image, and the output can be text information.

In some embodiments, a first sample image may first be subjected to image encoding through a pre-trained image encoder to obtain image features of the first sample image, and then the image features of the first sample image are input into a second multimodal large language model, so that the second multimodal large language model outputs visual description information of the first sample image based on the image features of the first sample image. Further, since the dimension of the image features output by the image encoder may be different from the feature dimension supported by the second multimodal large language model, before inputting the image features of the first sample image into the second multimodal large language model, the dimension of the image features of the first sample image can also be aligned with the feature dimension supported by the second multimodal large language model. The alignment of feature dimensions can be implemented through a multi-layer perceptron.

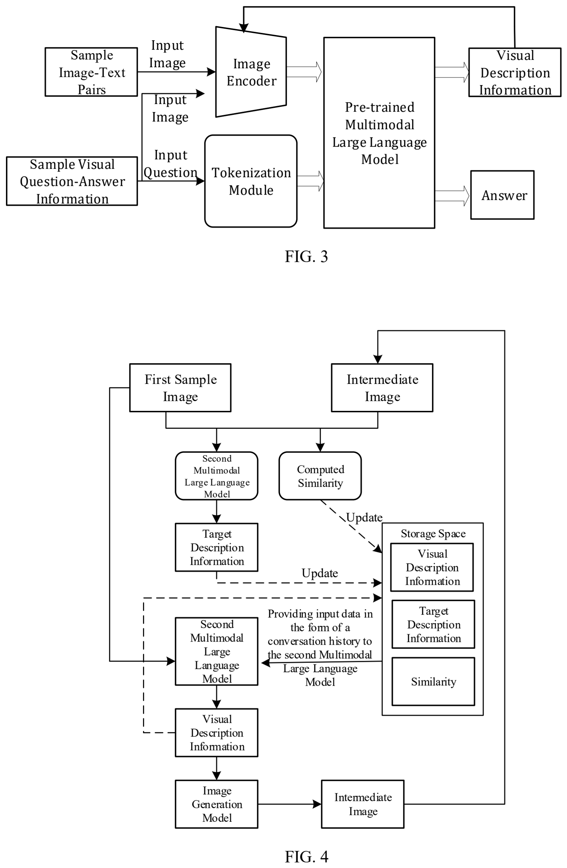

In some embodiments, the first multimodal large language model is trained based on sample image-text pairs and sample visual question-answer information. In some embodiments, a sample image-text pair includes a first sample image and sample visual description information corresponding to the first sample image (the sample visual description information can also be text information), and the sample visual question-answer information includes a second sample image, a question about the second sample image, and an answer to the question. By using image-text pairs during the training process, the first multimodal large language model can learn the relationship between objects, scenes in an image and the corresponding text descriptions. This helps the first multimodal large language model to understand the content and context of the image, thus being more accurate when generating visual description information. By using sample visual question-answer information during the training process, the first multimodal large language model can learn the ability to understand image content and answer specific questions based on that content, thereby improving the reasoning ability and contextual understanding ability of the first multimodal large language model when processing multimodal information. Referring to FIG. 3, the training process is as follows:

Sample data including sample image-text pairs and sample visual question-answer information is acquired, visual description information of the first sample image output by a pre-trained multimodal large language model is acquired, and an answer output by the pre-trained multimodal large language model based on the second sample image and the question is acquired. The pre-trained multimodal large language model is fine-tuned based on a difference between the visual description information output by the pre-trained multimodal large language model and the sample visual description information (hereinafter referred to as a first difference), and a difference between the answer output by the pre-trained multimodal large language model and the answer included in the sample visual question-answer information (hereinafter referred to as a second difference), to obtain the first multimodal large language model.

Specifically, during the model fine-tuning process, the first sample image in the sample image-text pair can be encoded by an image encoder to obtain features of the first sample image, and the features are input into the pre-trained multimodal large language model. When processing the sample visual question-answer information, the second sample image in the sample visual question-answer information can be encoded by the image encoder to obtain features of the second sample image, and the features are input into the pre-trained multimodal large language model. The question in the sample visual question-answer information can also be subjected to tokenization by a tokenization module to obtain a plurality of tokens corresponding to the question, and the plurality of tokens corresponding to the question are input into the pre-trained multimodal large language model. The visual description information and the answer output by the pre-trained multimodal large language model, as well as the answer in the sample visual question-answer information, can also be subjected to tokenization by the tokenization module. The aforementioned first difference can be determined based on the tokens corresponding to the visual description information output by the pre-trained multimodal large language model and the tokens corresponding to the sample visual description information. The aforementioned second difference can be determined based on the tokens corresponding to the answer output by the pre-trained multimodal large language model and the tokens corresponding to the answer included in the sample visual question-answer information.

The aforementioned first difference can reflect the understanding ability of the pre-trained multimodal large language model for the first sample image. The more accurate the visual description information output by the pre-trained multimodal large language model for the first sample image, the smaller the first difference, indicating that the understanding ability of the pre-trained multimodal large language model for the first sample image is stronger. The aforementioned second difference can reflect the reasoning ability, text generation ability, and degree of contextual understanding of the pre-trained multimodal large language model. The more accurate the answer output by the pre-trained multimodal large language model for the question corresponding to the second sample image, the smaller the second difference, indicating that the reasoning ability, text generation ability, and degree of contextual understanding of the pre-trained multimodal large language model are stronger.

The first multimodal large language model obtained by fine-tuning in the above manner can be applied to a plurality of preset styles. That is, regardless of the style of the target image required by the user, the visual description information of the original image can be extracted through the first multimodal large language model, without needing to fine-tune a first multimodal large language model for each of a plurality of styles, thereby reducing training complexity.

In some embodiments, the first sample image in the sample image-text pair can be acquired and annotated to obtain the sample visual description information in the sample image-text pair. However, the annotation cost of this method is relatively high. To reduce the annotation cost, sample image-text pairs can be automatically generated through a second multimodal large language model. The specific method for automatically generating sample image-text pairs will be illustrated below with reference to FIG. 4.

First, visual description information of a first sample image output by a second multimodal large language model can be acquired. In some embodiments, the second multimodal large language model may be a multimodal large language model with a different structure or type from the first multimodal large language model. The visual description information of the first sample image can be extracted through the second multimodal large language model. The visual description information of the first sample image may be similar to the visual description information of the original image. For details, reference can be made to the foregoing embodiments, and details are not repeated here.

Then, an intermediate image is generated based on the visual description information output by the second multimodal large language model. In this step, an image generation model (such as a Generative Adversarial Network (GAN) or a Variational Autoencoder (VAE)) can be used to restore the visual description information output by the second multimodal large language model into the intermediate image. There may be a certain difference between the visual features of the restored intermediate image and the visual features of the first sample image. Therefore, target description information can be acquired, where the target description information is used to describe the inconsistent visual features between the intermediate image and the first sample image. Specifically, both the intermediate image and the first sample image can be input into the second multimodal large language model to acquire the target description information through the second multimodal large language model.

Then, a similarity between the intermediate image and the first sample image is determined based on the target description information and the visual description information output by the second multimodal large language model. For example, the aforementioned similarity can be a similarity score. The number of inconsistent visual features between the intermediate image and the first sample image can be determined based on the target description information, and the total number of visual features of the first sample image can be determined based on the visual description information output by the second multimodal large language model. A similarity score between the intermediate image and the first sample image is determined based on a ratio of the number of inconsistent visual features between the intermediate image and the first sample image to the total number of visual features. Certainly, other methods can also be used to determine the similarity between the intermediate image and the first sample image, which is not limited in the present application.

If the determined similarity is greater than a preset similarity threshold, it indicates that the visual description information output by the second multimodal large language model has a high degree of matching with the first sample image, and therefore the first sample image can be highly restored based on the visual description information. Therefore, the first sample image and the visual description information output by the second multimodal large language model can be determined as a sample image-text pair. Otherwise, the process can return to the step of acquiring the visual description information of the first sample image output by the pre-trained second multimodal large language model, in order to regenerate the visual description information of the first sample image. Specifically, the visual description information generated by the second multimodal large language model in the previous round of dialogue, the target description information, and the similarity score between the first sample image and the intermediate image can be passed to the second multimodal large language model in the form of historical dialogue, so that the second multimodal large language model regenerates the visual description information of the first sample image based on the aforementioned information.

In step S14, style transfer can be performed on the original image through a pre-trained style transfer model to obtain a target image of a preset style.

The style transfer model may include a color feature extraction module for extracting color features and a non-color feature extraction module for extracting other visual features other than color features (such as shape features, texture features, etc.). The description information corresponding to the original image can be input into the color feature extraction module and the non-color feature extraction module, so that visual features of the original image in various dimensions (including color features and non-color features) can be extracted. At the same time, the original image itself can also be input into the style transfer model, so that the style transfer model extracts visual features from the original image. However, the inventor found that if the original image is input into all feature extraction modules, the style transfer model will reference all dimensional visual features of the original image when performing style transfer, thereby causing the output target image to be close to the original image in all feature dimensions, which in turn reduces the consistency between the target image and the preset style.

Therefore, the present application only performs targeted injection of the original image into the color feature extraction module, and not into the non-color feature extraction module. The color feature extraction module can jointly extract color features based on the original image and its visual description information, while the non-color feature extraction module extracts non-color features only based on the visual description information of the original image. Finally, the style transfer model can jointly output the target image of the preset style based on the color features extracted by the color feature extraction module and the non-color features extracted by the non-color feature extraction module. By adopting the above method, the original image is referenced only when extracting color features, and not when extracting other visual features, which prevents the other visual features of the original image from affecting the feature extraction process, enabling the target image to follow the preset style well.

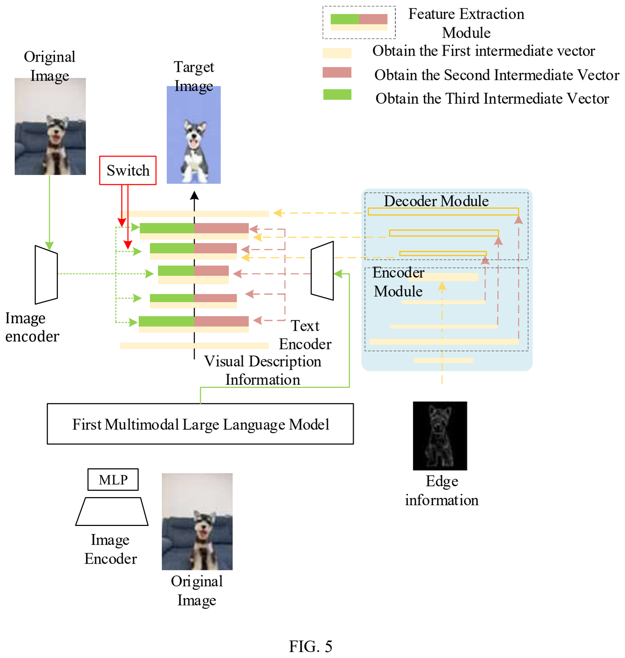

The specific implementation of each feature extraction module will be illustrated below with reference to FIG. 5.

In some embodiments, an i-th feature extraction module among the plurality of feature extraction modules can perform feature extraction in the following manner: if the i-th feature extraction module is a color feature extraction module, the visual description information and the original image are both fused with features extracted from an input latent vector of the i-th feature extraction module to obtain an output feature of the i-th feature extraction module; if the i-th feature extraction module is a non-color feature extraction module, the visual description information is fused with features extracted from the input latent vector of the i-th feature extraction module to obtain the output feature of the i-th feature extraction module. Through the above manner, the original image can be selectively injected into the color feature extraction module, instead of injecting the original image into every feature extraction module in the style transfer model.

In some embodiments, each feature extraction module can use an attention mechanism for feature extraction. Specifically, an input latent vector of an i-th feature extraction module can be acquired, and self-attention processing is performed on the input latent vector of the i-th feature extraction module to obtain a first intermediate vector of the i-th feature extraction module. In some embodiments, a first intermediate vector of an (i-1)-th feature extraction module can be used as the input latent vector of the i-th feature extraction module among the plurality of feature extraction modules, and the first intermediate vector of the i-th feature extraction module can be used as an input latent vector of an (i+1)-th feature extraction module among the plurality of feature extraction modules, and so on. An input latent vector of a 1st feature extraction module is an original latent vector.

For the visual description information, a text vector corresponding to the visual description information can be acquired, and cross-attention processing is performed on the text vector and the first intermediate vector of the i-th feature extraction module to obtain a second intermediate vector of the i-th feature extraction module. In the above embodiment, a latent vector is a vector of a preset dimension, representing the position or features of input data in a latent space. By performing self-attention processing on the input latent vector, it is possible to focus on different regions of the input image, re-weight the features of these regions to highlight important parts and suppress irrelevant information. This helps the style transfer model learn the relationships between various parts of the image, thereby improving the quality of the generated image. By performing cross-attention processing, the style transfer model can combine information from different modalities (including the original image and the visual description information), thereby better capturing the visual features of the image. As shown in FIG. 5, each feature extraction module includes three functional modules, shown as a yellow block, a green block, and a red block in the figure. In some embodiments, the yellow block represents the function for performing the aforementioned self-attention processing to obtain the first intermediate vector, the red block represents the function for performing cross-attention processing to obtain the second intermediate vector, and the green block represents the function for performing cross-attention processing to obtain a third intermediate vector.

If the i-th feature extraction module is a color feature extraction module, cross-attention processing can be performed on a feature vector corresponding to the original image and the first intermediate vector of the i-th feature extraction module to obtain a third intermediate vector of the i-th feature extraction module, and the second intermediate vector and the third intermediate vector are fused to serve as an output feature of the i-th feature extraction module. The output feature of the i-th feature extraction module can be output to an (i+1)-th feature extraction module. If the i-th feature extraction module is a non-color feature extraction module, the second intermediate vector is directly used as the output feature of the i-th feature extraction module, and the output feature of the i-th feature extraction module is output to the (i+1)-th feature extraction module. In this way, targeted injection of the original image into the color feature extraction module is achieved. Continuing to refer to FIG. 5, the original image can be target-injected into a specified feature extraction module, which is equivalent to setting a corresponding "switch" for each feature extraction module. By controlling the switch to be closed, the original image can be injected into the feature extraction module; by controlling the switch to be open, the original image is not injected into the feature extraction module.

In some embodiments, the second intermediate vector can be weighted based on a preset text weight to obtain a weighted second intermediate vector, and the third intermediate vector can be weighted based on a preset image weight to obtain a weighted third intermediate vector. Then, the weighted second intermediate vector and the weighted third intermediate vector are summed. In some embodiments, the weights corresponding to the second intermediate vector and the third intermediate vector can be adjusted according to actual needs. Through the above weighting process, the relative influence of the visual description information and the original image on the feature extraction result can be adjusted, allowing a user to flexibly choose to perform feature extraction mainly based on the visual description information or mainly based on the original image.

In some embodiments, the aforementioned self-attention processing can be implemented in the following manner: edge detection can be performed on a target object in the original image to obtain edge features of the target object, the aforementioned edge features are fused with the input latent vector of the i-th feature extraction module to obtain a fused latent vector, and self-attention processing is performed on the fused latent vector. Since the edge features can reflect the shape and contour of the target object in the original image, performing self-attention processing based on the edge features can keep the shape and contour of the target object consistent before and after style transfer. Further, before performing edge detection, image segmentation can also be performed on the original image to remove a background region of the original image. By removing the background region, the influence of the background region on edge detection can be reduced, and the accuracy of edge detection can be improved.

In some embodiments, continuing to refer to FIG. 5, the plurality of feature extraction modules include a plurality of encoder modules for performing feature encoding and a plurality of decoder modules for performing feature decoding, and the plurality of encoder modules and the plurality of decoder modules correspond one-to-one. The color feature extraction module may include at least one encoder module and at least one decoder module, and the non-color feature extraction module may also include at least one encoder module and at least one decoder module. In some embodiments, if the i-th feature extraction module is one of the plurality of encoder modules, then the input latent vector of the i-th feature extraction module is an output latent vector of an (i-1)-th feature extraction module among the plurality of feature extraction modules. If the i-th feature extraction module is one of the plurality of decoder modules, then the input latent vector of the i-th feature extraction module is obtained by fusing an output latent vector of an encoder module corresponding to the i-th feature extraction module and an output latent vector of the (i-1)-th feature extraction module among the plurality of feature extraction modules. The encoder module is usually responsible for extracting contextual features of input data. In this embodiment, by fusing the output latent vector of the encoder module into the decoder module, the contextual features extracted by the encoder module can be injected into the decoder module, enabling the decoder module to generate more coherent output with contextual understanding, improving the feature extraction effect, and thus improving the style transfer effect.

In practical applications, there may be a plurality of commonly used styles for style transfer. The plurality of commonly used styles can all be used as candidate styles, and a plurality of candidate style transfer models can be pre-generated corresponding to the plurality of candidate styles, respectively. Each generated style transfer model can include the color feature extraction module and the non-color feature extraction module from the foregoing embodiments. The specific implementation thereof is detailed in the foregoing embodiments and will not be repeated here. In practical applications, a preset style selected by a user from the plurality of candidate styles can be acquired, and style transfer is performed on the original image through the candidate style transfer model corresponding to the selected preset style, thereby adapting to different style transfer needs.

The solution of the present application can be widely applied to the style transfer of various original images. The following uses a specific application scenario as an example to illustrate the solution of the present application. In this application scenario, the original image is a pet wallpaper image. Through data augmentation (using the original image and its visual description information as input data for style transfer), multimodal large language model fine-tuning, and targeted injection (the original image is only injected into the color feature extraction module) techniques, the present application can improve the consistency between the pet fur color in a target image and the pet fur color in the original image (i.e., the consistency of color features), enhance the quality of the target image, and maintain the compatibility of a preset style during style transfer. The specific solution is as follows:

During the style transfer process, an SD-Unet model is used as the style transfer model. First, edge detection is performed on the original image, and the result is injected into the decoding process of the SD-Unet model through Control-net, so that the pet in the generated target image maintains a consistent body shape with the pet in the original image. Regarding the solution for fur color consistency, the information input to the SD-Unet model is enhanced through two parts: 1) A first multimodal large language model based on the Llava architecture is fine-tuned to more fully understand the fur color within the original image, thereby enhancing the fur color-related control information input to the SD-Unet model; 2) The pre-trained cross-attention (crossAttention) of IPAdapter is used for targeted injection into the 3rd and 5th feature extraction modules of the SD-Unet model (i.e., the color feature extraction modules in the foregoing embodiments), maximizing the preservation of the color features of the target object in the original image during the style transfer process, while reducing the influence of other visual features in the original image on the style transfer process.

To enable the first multimodal large language model to have an accurate understanding of the main subject's fur color, this solution uses a data augmentation method to re-perform supervised fine-tuning on the model to enhance its fur color understanding capability. Specifically, based on the multimodal capabilities of a GPT4-o model (i.e., a second multimodal large language model), a batch of high-quality pet fur color description sample image-text pair data (i.e., the sample image-text pairs in the foregoing embodiments) is distilled by combining chain-of-thought prompting and multi-round self-feedback iteration techniques, and the first multimodal large language model is fine-tuned based on the aforementioned sample image-text pair data. In the chain-of-thought prompting technique, the present application structurally defines all semantically describable visual feature dimensions of pet fur color based on prior observations. In the multi-round self-feedback iteration technique, deviations in the generated visual description information are gradually corrected.

The first multimodal large language model, after data augmentation and fine-tuning, has a better understanding of the fur color of the main subject pet (i.e., the target object) in the original image. The present application further utilizes it to generate detailed visual description information as control information to enhance the main subject consistency preservation of the style transfer model.

During the style transfer process, the preset style is implemented based on different style Lora models. Since various preset styles have varying degrees of influence on the fur color of the main subject pet, when using the IPAdapter pre-trained crossAttention, the feature extraction modules of the SD-Unet model are flexibly selected for targeted injection to adjust the style transfer effect while ensuring main subject consistency. Taking the StableDiffusionXL model as an example, injection control is performed on the 11 layers of BasicTransformerBlock in the SD-Unet model, and the weights of each layer can be adjusted simultaneously.

The present application controls the color consistency of the target object in the original image from two aspects: 1) Through detailed visual description information, global color and layout information of the target object are injected into the style transfer model, and the text prompt conforms to the data distribution during the pre-training of the style transfer model, thus resulting in better image generation quality and harmony between different attributes; 2) More fine-grained image information of the target object is directly injected through the original image, and precise control of the target object's consistency is achieved through model targeted injection and the inference process, while avoiding conflicts with other visual features.

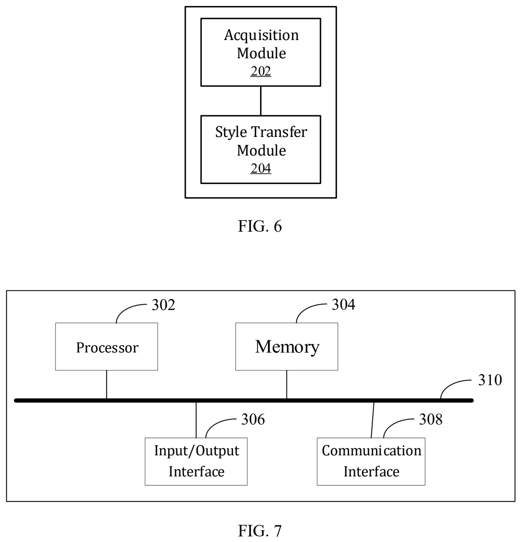

Referring to FIG. 6, the present application also provides an image generation apparatus, the apparatus comprising:
an acquisition module 202, configured to acquire an original image and visual description information corresponding to the original image;
a style transfer module 204, configured to perform style transfer on the original image through a pre-trained style transfer model to obtain a target image in a preset style.

The style transfer model includes a plurality of feature extraction modules, the plurality of feature extraction modules comprising a color feature extraction module configured to extract a color feature and a non-color feature extraction module configured to extract a visual feature other than the color feature; the color feature extraction module is configured to extract the color feature of a target object based on the original image and the visual description information, the non-color feature extraction module is configured to extract the other visual feature of the target object based on the visual description information; and the style transfer model is configured to perform style transfer on the original image based on the color feature extracted by the color feature extraction module and the other visual feature extracted by the non-color feature extraction module to obtain the target image.

The apparatus provided in an embodiment of the present application, or the modules included therein, may be configured to perform the method described in the foregoing method embodiments. For its specific implementation, reference can be made to the description of the foregoing method embodiments, which will not be repeated here for the sake of brevity.

An embodiment of the present application also provides a computer device, which at least includes a memory, a processor, and a computer program stored on the memory and executable on the processor, wherein when the processor executes the program, the method described in any of the foregoing embodiments is implemented.

FIG. 7 shows a schematic diagram of a more specific hardware structure of a computer device provided by an embodiment of the present application. The device may include: a processor 302, a memory 304, an input/output interface 306, a communication interface 308, and a bus 310. The processor 302, the memory 304, the input/output interface 306, and the communication interface 308 achieve communication connection with each other within the device through the bus 310.

The processor 302 may be implemented by a general-purpose Central Processing Unit (CPU), a microprocessor, an Application Specific Integrated Circuit (ASIC), or one or more integrated circuits, and is used to execute relevant programs to implement the technical solutions provided by the embodiments of the present application. The processor 302 may also include a graphics card, which may be an Nvidia Titan X graphics card or a 1080Ti graphics card, etc.

The memory 304 may be implemented in the form of a Read Only Memory (ROM), a Random Access Memory (RAM), a static storage device, a dynamic storage device, or the like. The memory 304 can store an operating system and other application programs. When the technical solutions provided by the embodiments of the present application are implemented by software or firmware, the relevant program code is saved in the memory 304 and is called and executed by the processor 302.

The input/output interface 306 is used to connect an input/output module to implement information input and output. The input/output module can be configured as a component in the device (not shown in the figure), or can be externally connected to the device to provide corresponding functions. The input device may include a keyboard, a mouse, a touchscreen, a microphone, various sensors, etc., and the output device may include a display, a speaker, a vibrator, an indicator light, etc.

The communication interface 308 is used to connect a communication module (not shown in the figure) to implement communication interaction between the device and other devices. The communication module can implement communication through a wired manner (e.g., USB, network cable, etc.), or through a wireless manner (e.g., mobile network, WIFI, Bluetooth, etc.).

The bus 310 includes a channel that transmits information among various components of the device (e.g., the processor 302, the memory 304, the input/output interface 306, and the communication interface 308).

It should be noted that although the above device only shows the processor 302, the memory 304, the input/output interface 306, the communication interface 308, and the bus 310, in a specific implementation process, the device may also include other components necessary for normal operation. In addition, a person of ordinary skill in the art can understand that the above device may also only include the components necessary to implement the solution of the embodiments of the present application, and does not necessarily have to include all the components shown in the figure.

An embodiment of the present application provides a computer program product, including a computer program, which, when executed by a processor, implements the method described in any embodiment of the present application.

An embodiment of the present application also provides a computer-readable storage medium, on which a computer program is stored, which, when executed by a processor, implements the method described in any of the foregoing embodiments.

Computer-readable media, which can be implemented by any method or technology for information storage, include permanent and non-permanent media, and removable and non-removable media. The information can be computer-readable instructions, data structures, program modules, or other data. Examples of computer storage media include, but are not limited to, phase-change memory (PRAM), static random access memory (SRAM), dynamic random access memory (DRAM), other types of random access memory (RAM), read-only memory (ROM), electrically erasable programmable read-only memory (EEPROM), flash memory or other memory technology, compact disc read-only memory (CD-ROM), digital versatile disc (DVD) or other optical storage, magnetic cassettes, magnetic tape, magnetic disk storage or other magnetic storage devices, or any other non-transitory medium that can be used to store information that can be accessed by a computer device. As defined herein, computer-readable media do not include transitory computer-readable media, such as modulated data signals and carrier waves.

The embodiments in the present application are described in a progressive manner, wherein similar or identical parts of the various embodiments can be cross-referenced. Each embodiment focuses on describing the differences from other embodiments. In particular, for the apparatus embodiments, since they are basically similar to the method embodiments, the description is relatively simple, and for relevant parts, reference can be made to the description of the method embodiments. The apparatus embodiments described above are merely illustrative. The modules described as separate components may or may not be physically separate. The functions of each module can be implemented in one or more software and/or hardware when implementing the solution of the embodiments of the present application. It is also possible to select some or all of the modules according to actual needs to achieve the purpose of the solution of this embodiment. A person of ordinary skill in the art can understand and implement it without creative labor.

The foregoing descriptions are merely specific implementation manners of embodiments of the present application. It should be pointed out that for a person of ordinary skill in the art, several improvements and modifications can be made without departing from the principles of the embodiments of the present application, and these improvements and modifications should also be considered within the protection scope of the embodiments of the present application.

## Claims

1. An image generation method, the method comprising:
acquiring an original image and visual description information corresponding to the original image;
performing style transfer on the original image through a pre-trained style transfer model to obtain a target image in a preset style;
wherein:
the style transfer model comprises a plurality of feature extraction modules, the plurality of feature extraction modules comprising a color feature extraction module and a non-color feature extraction module;
the color feature extraction module is configured to extract a color feature of a target object based on the original image and the visual description information;
the non-color feature extraction module is configured to extract another visual feature of the target object based on the visual description information; and
the style transfer model is configured to perform the style transfer on the original image based on the color feature and the other visual feature to obtain the target image.

2. The method according to claim 1, wherein acquiring the original image and the visual description information corresponding to the original image comprises:
extracting the visual description information corresponding to the original image through a pre-trained first multimodal large language model.

3. The method according to claim 2, wherein the first multimodal large language model is obtained by:
acquiring sample data, wherein the sample data comprises a sample image-text pair and sample visual question-answer information, the sample image-text pair comprises a first sample image and sample visual description information corresponding to the first sample image, and the sample visual question-answer information comprises a second sample image, a question about the second sample image, and an answer to the question;
acquiring visual description information for the first sample image output by the pre-trained multimodal large language model, and acquiring an answer output by the pre-trained multimodal large language model based on the second sample image and the question; and
fine-tuning the pre-trained multimodal large language model based on a difference between the visual description information output by the pre-trained multimodal large language model and the sample visual description information, and a difference between the answer output by the pre-trained multimodal large language model and the answer comprised in the sample visual question-answer information, to obtain the first multimodal large language model.

4. The method according to claim 3, the method further comprising:
acquiring the visual description information of the first sample image output by a second multimodal large language model;
generating an intermediate image based on the visual description information output by the second multimodal large language model;
acquiring target description information, wherein the target description information is used to describe an inconsistent visual feature between the intermediate image and the first sample image;
determining a similarity between the intermediate image and the first sample image based on the target description information and the visual description information output by the second multimodal large language model; and
if the similarity is greater than a preset similarity threshold, determining the first sample image and the visual description information output by the second multimodal large language model as the sample image-text pair; otherwise, returning to the step of acquiring the visual description information of the first sample image.

5. The method according to claim 4, wherein the second multimodal large language model outputs the visual description information of the first sample image based on an image feature of the first sample image; wherein the image feature of the first sample image is obtained by performing image encoding on the first sample image using a pre-trained image encoder.

6. The method according to claim 1, wherein an i-th feature extraction module among the plurality of feature extraction modules performs feature extraction by:
if the i-th feature extraction module is the color feature extraction module, fusing both the visual description information and the original image with a feature extracted from an input latent vector of the i-th feature extraction module to obtain an output feature of the i-th feature extraction module; and
if the i-th feature extraction module is the non-color feature extraction module, fusing the visual description information with the feature extracted from the input latent vector of the i-th feature extraction module to obtain the output feature of the i-th feature extraction module.

7. The method according to claim 6, wherein the feature extracted from the input latent vector of the i-th feature extraction module is a first intermediate vector of the i-th feature extraction module, and the first intermediate vector of the i-th feature extraction module is obtained by performing self-attention processing on the input latent vector of the i-th feature extraction module;
wherein fusing both the visual description information and the original image with the feature extracted from the input latent vector of the i-th feature extraction module to obtain the output feature of the i-th feature extraction module comprises:
acquiring a text vector corresponding to the visual description information, and performing cross-attention processing on the text vector and the first intermediate vector of the i-th feature extraction module to obtain a second intermediate vector of the i-th feature extraction module;
performing cross-attention processing on a feature vector corresponding to the original image and the first intermediate vector of the i-th feature extraction module to obtain a third intermediate vector of the i-th feature extraction module; and
fusing the second intermediate vector and the third intermediate vector, and using a result of the fusion as the output feature of the i-th feature extraction module.

8. The method according to claim 6, wherein the feature extracted from the input latent vector of the i-th feature extraction module is a first intermediate vector of the i-th feature extraction module, and the first intermediate vector of the i-th feature extraction module is obtained by performing self-attention processing on the input latent vector of the i-th feature extraction module;
wherein fusing the visual description information with the feature extracted from the input latent vector of the i-th feature extraction module to obtain the output feature of the i-th feature extraction module comprises:
acquiring a text vector corresponding to the visual description information, and performing cross-attention processing on the text vector and the first intermediate vector of the i-th feature extraction module to obtain a second intermediate vector of the i-th feature extraction module; and
determining the second intermediate vector as the output feature of the i-th feature extraction module.

9. The method according to claim 7, wherein fusing the second intermediate vector and the third intermediate vector comprises:
weighting the second intermediate vector based on a preset text weight to obtain a weighted second intermediate vector;
weighting the third intermediate vector based on a preset image weight to obtain a weighted third intermediate vector; and
summing the weighted second intermediate vector and the weighted third intermediate vector.

10. The method according to claim 7 or 8, wherein performing self-attention processing on the input latent vector of the i-th feature extraction module comprises:
performing edge detection on the target object in the original image to obtain an edge feature of the target object;
fusing the edge feature with the input latent vector of the i-th feature extraction module to obtain a fused latent vector; and
performing self-attention processing on the fused latent vector.

11. The method according to claim 10, wherein the plurality of feature extraction modules comprise a plurality of encoder modules configured to perform feature encoding and a plurality of decoder modules configured to perform feature decoding, and the plurality of encoder modules correspond one-to-one with the plurality of decoder modules; wherein,
if the i-th feature extraction module is one of the plurality of encoder modules, the input latent vector of the i-th feature extraction module is an output latent vector of an (i-1)-th feature extraction module among the plurality of feature extraction modules; and
if the i-th feature extraction module is one of the plurality of decoder modules, the input latent vector of the i-th feature extraction module is obtained by fusing an output latent vector of an encoder module corresponding to the i-th feature extraction module and an output latent vector of the (i-1)-th feature extraction module among the plurality of feature extraction modules.

12. The method according to claim 1, wherein performing style transfer on the original image through the pre-trained style transfer model comprises:
acquiring the preset style selected by a user from a plurality of candidate styles, wherein the plurality of candidate styles respectively correspond to a plurality of candidate style transfer models; and
performing style transfer on the original image through a candidate style transfer model corresponding to the selected preset style.

13. A computer-readable storage medium, on which a computer program is stored, wherein the computer program, when executed by a processor, implements the method according to any one of claims 1 to 12.

14. A computer device, comprising a memory, a processor, and a computer program stored on the memory and executable on the processor, wherein when the processor executes the computer program, the method according to any one of claims 1 to 12 is implemented.

15. A computer program product, comprising a computer program, wherein when the computer program is executed by a processor, the method according to any one of claims 1 to 12 is implemented.
